# EUROPÄISCHE PATENTSCHRIFT

(11) **EP 2 785 568 B1**
(45) Veröffentlichungstag und Bekanntmachung des Hinweises auf die Patenterteilung: **06.04.2016**
(21) Anmeldenummer: 12794966.7
(22) Anmeldetag: 30.11.2012
(51) Int. Cl.: B60T 17/08, F16D 65/14

(54) **FEDERSPEICHERBREMSZYLINDER MIT NOTLÖSEEINRICHTUNG**
SPRING BRAKE CYLINDER WITH EMERGENCY RELEASE DEVICE
CYLINDRE DE FREIN À RESSORT AVEC DISPOSITIF DE DESSERRAGE D'URGENCE

(30) Priorität: 02.12.2011 DE 102011119998
(43) Veröffentlichungstag der Anmeldung: 08.10.2014
(73) Patentinhaber: KNORR-BREMSE Systeme für Schienenfahrzeuge GmbH, 80809 München (DE)
(72) Erfinder: ELSTORPFF, Marc-Gregory, München 80638 (DE); FUDERER, Erich, 82256 Fürstenfeldbruck (DE); HAUPT, Robert, 81379 München (DE); LEHNEIS, Michael, 81669 München (DE); HAEMMERL, Bernhard, 82216 Maisach (DE); MUELLEK, Ferenc, H-8000 Szekesfehervar (HU); ADAM, Zsolt, H-2092 Budakeszi (HU)
(86) Internationale Anmeldenummer: PCT/EP2012/074109
(87) Internationale Veröffentlichungsnummer: WO 2013/079667

(56) Entgegenhaltungen:
- DE-A1- 10 020 350

## Beschreibung

Die Erfindung betrifft einen Federspeicherbremszylinder mit einem Gehäuse, in dem ein durch wenigstens eine Federspeicherfeder belasteter Federspeicherkolben mit einer Kolbenstange axial verschiebbar ist, sowie mit einer Notlöseeinrichtung umfassend eine Notlösebetätigungseinrichtung, einen Notlösemechanismus mit einem Zahnrad zum Unterbrechen des Kraftflusses zwischen Federspeicherkolben und Kolbenstange sowie eine Halteeinrichtung, die zum Halten der Notlöseeinrichtung in verschiedenen Haltepositionen ausgelegt ist, wobei die Halteeinrichtung eine in Bezug zu dem Zahnrad in eine ein- und ausgerückte Position schwenkbare Sperrklinke und die Notlösebetätigungseinrichtung wenigstens ein gegenüber dem Gehäuse verschiebliches und durch Rückstellfedermittel in seine Ausgangslage belastetes Betätigungsglied sowie einen zusammen mit dem Betätigungsglied betätigbaren Mitnehmer zum Mitnehmen der Sperrklinke aufweist, derart, dass bei einer Betätigung des Betätigungsglieds die Betätigungskraft auf den Mitnehmer und von diesem auf die Sperrklinke übertragen wird, zum Überführen der Sperrklinke von einer gegenüber dem Zahnrad eingerückten Position in eine ausgerückte Position, gemäß dem Oberbegriff von Anspruch 1.

In Drehgestellen von Schienenfahrzeugen kommen Kompakt-Bremszangen als Bremskrafterzeuger für Scheibenbremsen zum Einsatz. Die Feststellbremse wird meist durch einen integrierten, pneumatisch angesteuerten Federspeicherbremszylinder realisiert, welcher eine manuell betätigbare, mechanische Notlöseeinrichtung aufweist. Eine durch einen Federspeicherbremszylinder eingebremste Bremszange kann damit auch dann wieder gelöst werden, wenn keine Druckluft als Energiequelle zur Verfügung steht. Diese Notlöseeinrichtung wird z.B. über einen Bowdenzug angesteuert.

Eine gattungsgemäßer Federspeicherbremszylinder mit Notlöseeinrichtung ist in DE 100 20 350 A1 beschrieben. Dort wird die Kraft der Speicherfedern über ein nicht selbsthemmendes Gewinde einer Spindelanordnung an die Bremszange abgegeben. Über eine Sperrklinke, die in ein mit der Spindel der Spindelanordnung drehfest verbundenes Zahnrad eingreift, wird ein Verdrehen der Spindel verhindert. Über einen Bowdenzug kann die Klinke aus der Verzahnung des Zahnrads gehoben werden. Dadurch wird die Verdrehsicherung der Spindel aufgehoben und über das nicht selbsthemmende Gewinde kann keine Axialkraft mehr übertragen werden. Die Sperrklinke muss soweit aus der Verzahnung gehoben werden, dass ein Riegel in eine entsprechende Ausnehmung an der Sperrklinke greifen kann und dadurch die Sperrklinke in ausgerückter Position halten kann, auch wenn der Bowdenzug in seine ursprüngliche Lage zurückgeschoben wird. Die Arretierung der Sperrklinke durch den Riegel wird aufgehoben, wenn der Federspeicherbremskolben durch Druckbeaufschlagung in seine Lösestellung geschoben wird und dadurch den Riegel aus der Ausnehmung der Sperrklinke schiebt. Damit wird die Bereitschaft des Federspeicherbremszylinders nach dem Notlösen wieder hergestellt.

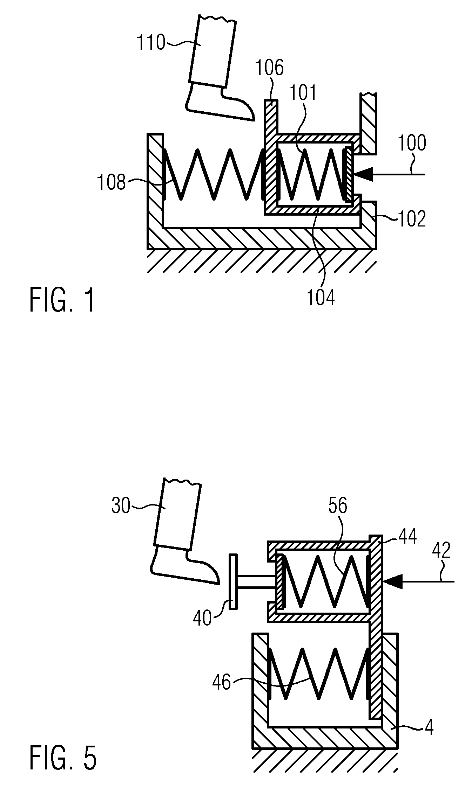

Im Einzelnen wird bei der bekannten Notlöseeinrichtung gemäß Fig.1 die über einen Bowdenzug 100 aufgebrachte Kraft über eine vorgespannte Feder 101 (dort: Bezugszahl 44) auf eine in einem Gehäuse 102 verschieblich gelagerte Hülse 104 aufgebracht, welche das Betätigungselement darstellt und auf welcher ein Mitnehmer 106 axialfest befestigt ist. Die Hülse 104 als Betätigungselement ist wiederum durch eine äußere Rückstellfeder 108 (dort: Bezugszahl 46) in ihre Ausgangslage vorgespannt, wobei die vorgespannte Feder 101 und die Rückstellfeder 108 in Reihe geschaltet sind. Vom Mitnehmer 106 wird dann die Betätigungsbewegung des Bowdenzugs 100 zunächst auf die vorgespannte Feder 101 und von dieser auf die Hülse 104 und den an ihr befestigten Mitnehmer 106 und von dort auf die Sperrklinke 110 übertragen.

Die Sperrklinke ist durch eine Rückstellfeder in die mit dem Zahnrad eingerückte Stellung vorbelastet. Nachdem die Sperrklinke durch den Mitnehmer aus der Verzahnung des Zahnrads in ihre ausgerückte Position gehoben wurde, muss sie noch soweit gegen die Kraft ihrer Rückstellfeder gedreht werden, bis ein Riegel in eine Ausnehmung in der Sperrklinke einfallen und so die Sperrklinke in ihrer ausgerückten Position verriegeln kann. Wird aber die Sperrklinke nicht soweit ausgehoben, dass der Riegel in die Ausnehmung der Sperrklinke eingreifen kann, können zwei unerwünschte Situationen auftreten. Zum einen kann die Sperrklinke auch in die Verzahnung einrasten, wenn der Federspeicherkolben seine Lösestellung noch gar nicht erreicht hat, beispielsweise infolge eines nicht ausreichenden Lösedrucks. Zum andern kann die Sperrklinke in das mit hoher Drehzahl rotierende Zahnrad einfallen, wodurch es zu Beschädigungen der Sperrklinke und/oder des Zahnrads kommen kann.

Um das Einrücken des Riegels in die Ausnehmung der Sperrklinke zuverlässig zu gewährleisten, muss sichergestellt sein, dass die Sperrklinke vollständig in ihre in Bezug zum Zahnrad ausgerückte Position gelangt. Bei dem oben diskutierten Stand der Technik hängt die zum vollständigen Ausheben der Sperrklinke notwendige Kraft von einer Abstimmung der in Reihe geschalteten Druckfeder und Rückstellfeder an der Hülse sowie der Rückstellfeder der Sperrklinke ab. Dies erfordert aber eine sehr hohe Fertigungsgenauigkeit bei der Herstellung der Federn. Außerdem ist der zum Ausheben der Sperrklinke erforderliche Hub am Bowdenzug relativ groß. Nicht zuletzt kann durch eine zu hohe Betätigungskraft am Bowdenzug die Sperrklinke überlastet werden.

### Aufgabe der Erfindung

Die Aufgabe der Erfindung besteht darin, einen Federspeicherbremszylinder der eingangs erwähnten Art derart weiter zu bilden, dass die oben erwähnten Nachteile vermieden werden. Insbesondere soll die Sperrklinke beim Notlösen auf jeden Fall zuverlässig vollständig in ihre ausgerückte Position bewegt werden können, damit die Sperrklinke in dieser Position verriegelt werden kann und damit ein unbeabsichtigtes Einfallen der Sperrklinke in das rotierende Zahnrad verhindert wird. Weiterhin soll eine Beschädigung der Sperrklinke durch eine zu hohe Betätigungskraft verhindert werden. Die Mittel zur Realisierung sollen weiterhin kostengünstig sein.

Diese Aufgabe wird erfindungsgemäß durch die Merkmale von Patentanspruch 1 gelöst.

### Offenbarung der Erfindung

Die Erfindung basiert auf dem Gedanken, dass zwischen dem Betätigungsglied und dem Mitnehmer oder zwischen dem Mitnehmer und der Sperrklinke Federmittel vorgesehen sind, welche parallel zu den Rückstellfedermitteln geschaltet sind und beim Mitnehmen der Sperrklinke durch den Mitnehmer unter Erzeugung einer Federkraft komprimiert werden, wobei diese Federkraft die Sperrklinke in die aus dem Zahnrad ausgerückte Position gespannt hält, wenn die Sperrklinke durch Betätigung des Betätigungsglieds in die in Bezug zum Zahnrad ausgerückte Position gebracht worden ist.

Mit anderen Worten werden beim Betätigen des wenigstens einen Betätigungselements die Federmittel komprimiert, wobei die beim Komprimieren erzeugte Federkraft dafür sorgt, dass die in ihre ausgerückte Position gebrachte Sperrklinke sicher in dieser Position gehalten wird, auch wenn das beispielsweise durch eine Rückstellfeder in seine Ausgangsstellung belastete Betätigungselement nicht mehr betätigt wird. Dadurch wird sichergestellt, dass die Sperrklinke durch eine Sperreinrichtung wie beispielsweise einen Riegel in dieser ausgerückten Position sicher verriegelt werden kann.

Außerdem sind dann wie bei der eingangs erwähnten DE 100 20 350 A1 keine drei Federn hinsichtlich ihrer Federkräfte abzustimmen, wovon zudem zwei Federn in Reihe geschaltet sind, sondern lediglich zwei Federn, nämlich die Federmittel sowie eine vorzugsweise vorgesehene Rückstellfeder für die Sperrklinke. Die Federmittel sind dann in Bezug zu der Rückstellfeder für das Betätigungselement parallel geschaltet, wie später noch ausführlicher erläutert wird.

Durch die in den Unteransprüchen aufgeführten Maßnahmen sind vorteilhafte Weiterbildungen und Verbesserungen der in Anspruch 1 angegebenen Erfindung möglich.

Besonders bevorzugt weist das Betätigungsglied wenigstens einen Bowdenzug sowie eine in dem Gehäuse verschieblich gelagerte Betätigungshülse auf, an welcher der Bowdenzug befestigt ist und welche gegen eine Betätigung durch den Bowdenzug rückstellende Rückstellfeder belastet ist. Wie bereits oben erwähnt, sind dann die Rückstellfeder und die Federmittel parallel geschaltet.

Vorzugsweise sind weiterhin die Federmittel so ausgelegt, dass die durch die Federmittel auf die Sperrklinke ausgeübte Federkraft kleiner ist als eine Kraft, welche notwendig ist, um die Sperrklinke von der in Bezug zum Zahnrad eingerückten Position in die ausgerückte Position zu bewegen. Anstatt der durch die Federmittel erzeugten Federkraft kann hier selbstverständlich auch das durch die Federkraft erzeugte Drehmoment herangezogen werden.

Besonders bevorzugt ist die Sperrklinke durch eine Rückstellfeder in die in Bezug zum Zahnrad eingerückte Position belastet, wobei sind die Federmittel weiterhin derart ausgelegt sind, dass das durch die Federmittel auf die Sperrklinke ausgeübte Drehmoment größer ist als das Drehmoment, welches die Rückstellfeder auf die Sperrklinke ausübt.

Gemäß einer Variante weisen die zwischen dem Betätigungsglied und dem Mitnehmer vorgesehenen Federmittel wenigstens eine Schraubenfeder auf. Bei dieser Variante ist der Mitnehmer an oder auf dem Betätigungsglied verschieblich gelagert. Weiterhin sind in diesem Fall beispielsweise mit dem Betätigungsglied verbundene Anschlagmittel vorgesehen, gegen welche der axial bewegliche Mitnehmer anschlagbar ausgebildet ist, wobei in Anschlagposition des Mitnehmers die zwischen dem Betätigungsglied und dem Mitnehmer vorgesehenen Federmittel um einen vorgegebenen Federweg komprimierbar sind. Dann ist die Größe des die Sperrklinke in die aus dem Zahnrad ausgerückte Position spannenden Drehmoments durch den vorgegebenen Federweg bestimmt.

Die Anschlagmittel können insbesondere durch eine mit dem Betätigungselement verbundene Hülse gebildet werden, welcher die Federmittel wenigstens teilweise umschließt, wobei der offene Rand der Hülse gegen eine Stirnfläche des Mitnehmers anschlagbar ausgebildet ist.

Besonders bevorzugt ist eine Sperreinrichtung zum Verhindern des Haltens der Sperrklinke bei nur teilweise gelöstem Federspeicherkolben vorgesehen, wobei die Sperreinrichtung einen Riegel aufweist, der die Sperrklinke in der ausgerückten Position verriegelt, bis der Federspeicherkolben vollständig gelöst ist. Besonders bevorzugt weist der Riegel im Wesentlichen eine bolzenartige Form auf und ist mit einem Riegelkopf versehen, welcher dazu ausgelegt ist, gegenüber einer Ausnehmung der Sperrklinke eine Eingriffstellung oder eine Außereingriffsstellung einzunehmen. Beispielsweise ist der Riegel durch eine Riegelfeder in die Eingriffstellung mit der Sperrklinke vorgespannt. Weiterhin kann der Riegel vom Federspeicherbremskolben aus der Eingriffsstellung in die Außereingriffsstellung verschiebbar ausgebildet sein.

Die durch Komprimieren der Federmittel bei einer Betätigung der Notlöseeinrichtung in den Federmitteln erzeugte Federkraft ist daher so hoch, dass sie die unbelastete, d.h. sich bereits in der ausgerückten Position befindliche Sperrklinke sicher in dieser ausgerückten Position halten kann. Die erforderliche Kraft, um die Federmittel bis zum Anschlag zu komprimieren ist kleiner als die minimale Aushebekraft der unter Last stehenden, d.h. sich in eingerückter Position mit dem Zahnrad befindlichen Sperrklinke. Somit kann die Federcharakteristik der Rückstellfeder des Betätigungselements bzw. der Betätigungshülse völlig unabhängig davon gewählt werden, denn sie hat keinen Einfluss auf den Notlösevorgang.

Wird daher das Betätigungselement betätigt bzw. der Bowdenzug gezogen, so werden zunächst gegen den Widerstand der unter Last stehenden, d.h. sich in eingerückter Position mit dem Zahnrad befindlichen Sperrklinke die Federmittel bis auf den Anschlag gespannt. Die durch die Kompression erzeugte Federkraft der Federmittel ist dabei aber so gering, dass die unter Last stehende Sperrklinke nicht aus der eingerückten Position in die ausgerückte Position gehoben werden kann. Erst wenn die Federmittel bis zum Anschlag am Mitnehmer zur Anlage kommen, wird durch die weiter gehende Bewegung des Mitnehmers auf die Sperrklinke eine Kraft aufgebracht, die ausreichend groß ist, um die Sperrklinke in die vollständig ausgerückte Position zu befördern.

Folglich wird die Energie, die erforderlich ist, um die Sperrklinke nach dem Ausrücken aus der Verzahnung des Zahnrads bis zur vollständig ausgerückten Position zu drehen, in welcher der Riegel die Sperrklinke verriegeln kann, als potentielle Energie in den Federmitteln gespeichert, bevor die Sperrklinke aus der Verzahnung des Zahnrads gehoben wird. Ist die Sperrklinke daher aus der Verzahnung des Zahnrads ausgerastet, wird sie, angetrieben durch die potentielle Energie der zuvor durch den Betätigungsprozess gespannten Federmittel gegen die Wirkung der Rückstellkraft der Rückstellfeder der Sperrklinke soweit ausgehoben, dass der Riegel der Sperreinrichtung an der Sperrklinke eingreifen kann.

Gemäß einer weiteren Variante können die zwischen dem Mitnehmer und der Sperrklinke vorgesehenen Federmittel wenigstens eine Blattfeder umfassen. In diesem Fall ist der Mitnehmer vorzugsweise mit dem Betätigungsglied axialfest verbunden, wobei die Rückstellfeder des Betätigungsglieds beispielsweise am Mitnehmer abgestützt ist.

Bei einer bevorzugten Ausführungsform des Federspeicherbremszylinders ist im Kraftfluss zwischen dem Federspeicherkolben und der Kolbenstange als Element des Notlösemechanismus eine Spindelanordnung mit Gewindespindel angeordnet. Hierbei wird das Drehmoment der Gewindespindel bevorzugt über eine verschiebbare Führung mit Passfeder auf das Zahnrad übertragen. Hingegen sind die Sperrklinke und der Riegel mit der Kolbenstange verbunden.

Der Federspeicherbremszylinder gemäß der Erfindung kann pneumatisch, hydraulisch oder elektromechanisch betätigt sein, wobei bei einer Auslegung mittels pneumatischer oder hydraulischer Betätigung ein Druckanschluss zum Beaufschlagen eines durch den Federspeicherkolben begrenzten Druckraums mit einem Druckfluid vorgesehen ist.

Weitere die Erfindung verbessernde Maßnahmen werden nachstehend gemeinsam mit der Beschreibung von bevorzugten Ausführungsbeispielen der Erfindung anhand der Zeichnung näher dargestellt.

In der Zeichnung zeigt
- Fig.1: eine stark schematisierte Darstellung eines Teils einer Notlöseeinrichtung des Stands der Technik;
- Fig.2: eine schematische Längsschnittsdarstellung eines Federspeicherbremszylinders mit einer Notlöseeinrichtung gemäß einer bevorzugten Ausführungsform der Erfindung;
- Fig.3: eine Querschnittsdarstellung des Federspeicherbremszylinders von Fig.1 entlang der Linie III-III von Fig.2;
- Fig.4: einen Ausschnitt von Fig.2 in vergrößerter Darstellung;
- Fig.5: eine stark schematisierte Darstellung eines Teils der Notlöseeinrichtung des Federspeicherbremszylinders von Fig.3;
- Fig.6-Fig.10: den Federspeicherbremszylinder von Fig.1 in verschiedenen Stadien des Notlösevorgangs;
- Fig.11: eine Querschnittsdarstellung eines Federspeicherbremszylinders gemäß einer weiteren Ausführungsform;
- Fig.12: den Federspeicherbremszylinder von Fig.11 während des Notlösevorgangs.

### Beschreibung der Ausführungsbeispiele

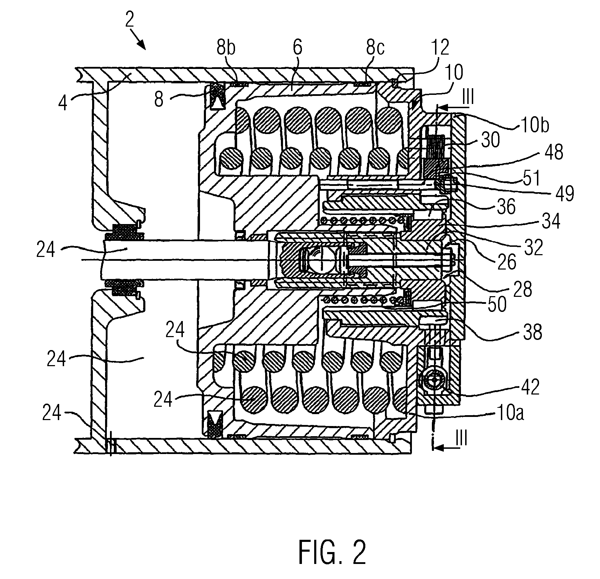

Zunächst sei am Beispiel einer bevorzugten, in Fig.2 bis Fig.10 gezeigten Ausführungsform eines Federspeicherbremszylinders 2 die Erfindung beschrieben, wie er beispielsweise in einer Bremszange als Bremskrafterzeuger für eine Scheibenbremse eines Drehgestells eines Schienenfahrzeugs zum Einsatz kommt.

Fig.2 bis Fig.4 zeigen dabei zwei verschiedene Ansichten des Federspeicherbremszylinders 2 mit einem Gehäuse 4, in dem ein Federspeicherkolben 6 axial verschiebbar angeordnet ist, an dessen Außenumfang Dichtungen und Gleitbänder 8a-8c verteilt sind. Zwischen dem Federspeicherkolben 6 und einem axialen Gehäusedeckel 10, der mittels eines Sprengringes 12 am Innenumfang des Gehäuses 4 befestigt ist, sind hier bevorzugt zwei Speicherfedern 14, 16 angeordnet.

Zwischen dem Federspeicherkolben 6 und dem Gehäuse 4 ist ein Druckraum 18 ausgebildet, welcher über einen Luftanschluss 20 im Umfang des Gehäuses 4 mit Druckluft beaufschlagbar ist. Die Federspeicherbremse kann durch Be- und Entlüften über den Luftanschluss 20 gelöst und zugespannt werden. Wenn sich der Federspeicherbremszylinder 2 nicht im notgelösten Betriebszustand befindet, stützt sich die Kraft der Federspeicherfedern 14, 16 über den Federspeicherkolben 6 entweder auf dem Druckraum bzw. -volumen 18 oder über eine Kolbenstange 24 an der hier nicht dargestellten Bremszange ab.

Zum Lösen der eingelegten Federspeicherbremse auch ohne Druckluft weist der Federspeicherbremszylinder 2 eine Notlöseeinrichtung 26 auf, die ein Unterbrechen des Kraftflusses zwischen Federspeicherkolben 6 und Kolbenstange 24 ermöglicht. Im dargestellten Beispiel basiert die Notlöseeinrichtung 26 im Wesentlichen auf der Funktion einer Spindelanordnung 28 mit einer Sperrklinke 30, die zwischen zwei axial zueinander versetzten Abschnitten 10a und 10b des Gehäusedeckels 10 verschwenkbar gelagert ist. Im Kraftfluss zwischen dem Federspeicherkolben 6 und der Kolbenstange 24 ist die Gewindespindel 32 der Spindelanordnung 28 angeordnet. Deren resultierendes Drehmoment wird im gesperrten Zustand über eine verschiebbare Führung 34 mit Passfeder 36 auf ein Zahnrad 38 übertragen, das von der Sperrklinke 30 verriegelbar ist oder freigegeben werden kann (siehe insbesondere auch Fig. 2).

Das eine Ende der Sperrklinke 30 greift dazu in einer der Betriebsstellungen der Notlöseeinrichtung 26 in das Zahnrad 38 ein. Das andere Ende der Sperrklinke 30 ist dagegen von einem Mitnehmer 40 einer Notlösebetätigungseinrichtung aus der Verzahnung des Zahnrades 38 hebbar, so dass dessen Drehung in dieser Stellung der Sperrklinke 30 freigegeben ist. Dadurch kann der Kraftfluss zwischen dem Federspeicherkolben 6 und der Kolbenstange 24 unterbrochen werden. Die Sperrklinke 30 ist um eine Achse 31 verschwenkbar. Eine Rückstellfeder 33 spannt die Sperrklinke in eine in Bezug zum Zahnrad 38 eingerückte Position vor.

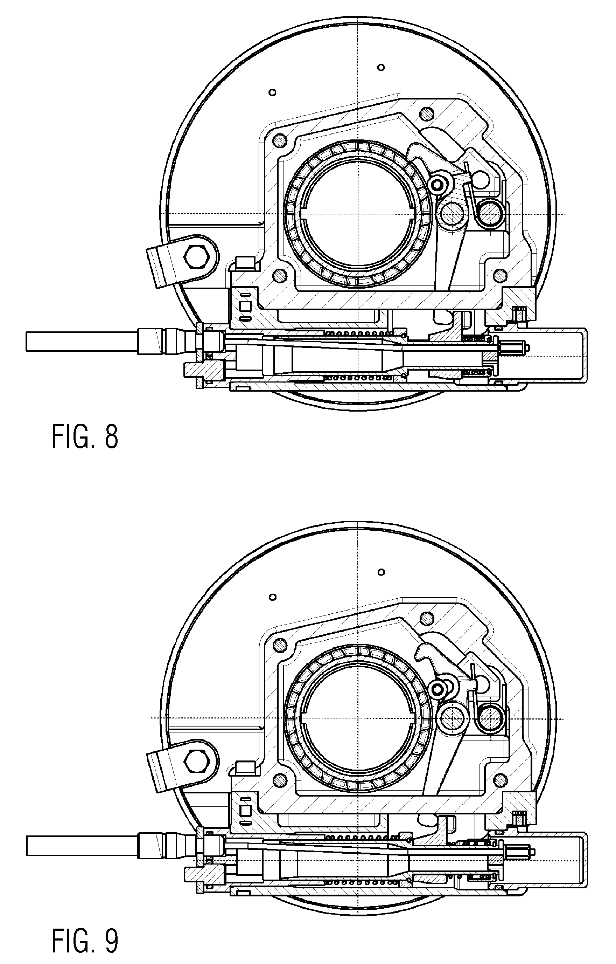

Wenn die Notlöseeinrichtung 26 bei an der Kolbenstange 24 anliegender eine Brems- bzw. Federkraft betätigt wird, kommt es zu einer Drehung der Gewindespindel 32, so dass sich die Bremskraft abbauen und der Federspeicherkolben 6 am Gehäuse 4 anschlagen kann. Hierzu muss die Sperrklinke 30 von ihrer in Fig.2 gezeigten und in Bezug zum Zahnrad 38 eingerückten Position in eine demgegenüber ausgerückte Position gemäß Fig.8 oder Fig.9 gebracht werden. Um ein erneutes Verriegeln der Sperrklinke 30 während des Notlösevorganges zu verhindern, ist an der Innenfläche des Abschnitts 10b des Federspeicher- bzw. Gehäusedeckels 10 ein Riegel 48 angeordnet, der in eine Ausnehmung 35 der Sperrklinke 30 eingreifen und somit die ausgehobene Sperrklinke 30 in ihrer ausgerückten Position zurückhalten kann.

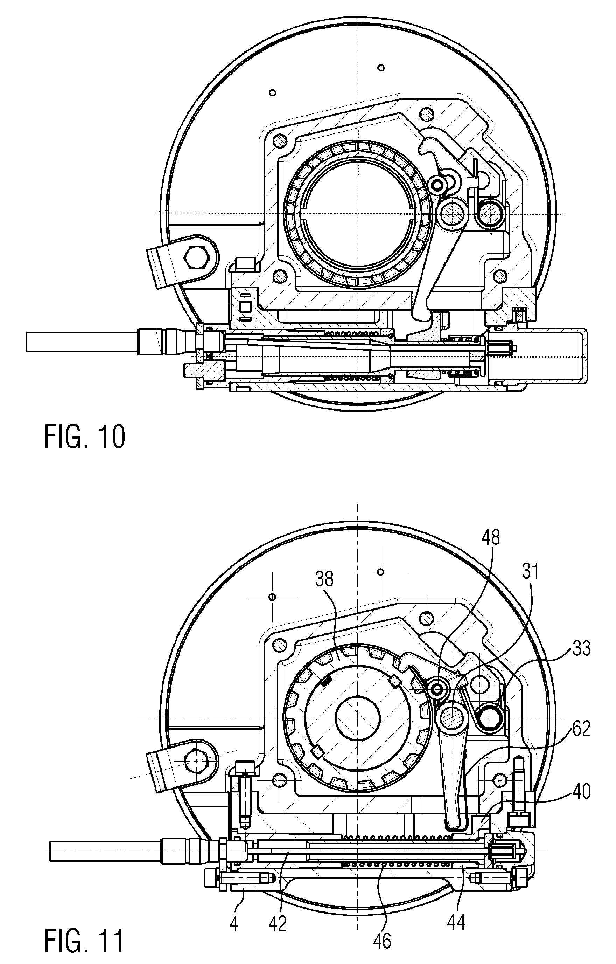

Der Riegel 48 weist im Wesentlichen eine bolzenartige Form auf und ist an seinem dem Gehäusedeckelabschnitt 10b zugewandten Ende mit einem Riegelkopf 51 versehen. Zwischen dem zweiteiligen Gehäusedeckel 10a, 10b (der in diesem Bereich eine Vertiefung aufweist) und dem Riegelkopf 51 (mit axialer Ausnehmung) ist eine Riegelfeder 49 angeordnet, welche den Riegel 48 in Richtung der Sperrklinke 30 drückt und dafür sorgt, dass der Riegelkopf 51 in einer der Betriebsstellungen in die seitliche, gestufte Ausnehmung 35 der Sperrklinke 30 zur Aufnahme des Riegels 48 eingreift und die Sperrklinke 30 in ihrer Lösestellung verriegelt (siehe Fig.9 oder Fig.10). Der vom Riegelkopf 51 abgewandte Abschnitt des Riegels 48 ist bolzenartig ausgebildet, wobei der bolzenartige Abschnitt den inneren Gehäusedeckelabschnitt 10a durchsetzt und beim Verschieben des Federspeicherkolbens 6 von diesem in Richtung des Gehäusedeckels 10 verschiebbar ist, was die Riegelfeder 49 zusammenpresst und den Riegel 48 aus seiner Raststellung in der Sperrklinke 30 drückt (Fig. 2). Erst wenn sich der Federspeicherkolben 6 nach einem Notlösevorgang wieder in betriebsbereiter Stellung befindet, gibt der Riegel 48 die Sperrklinke 30 zum Einrasten frei.

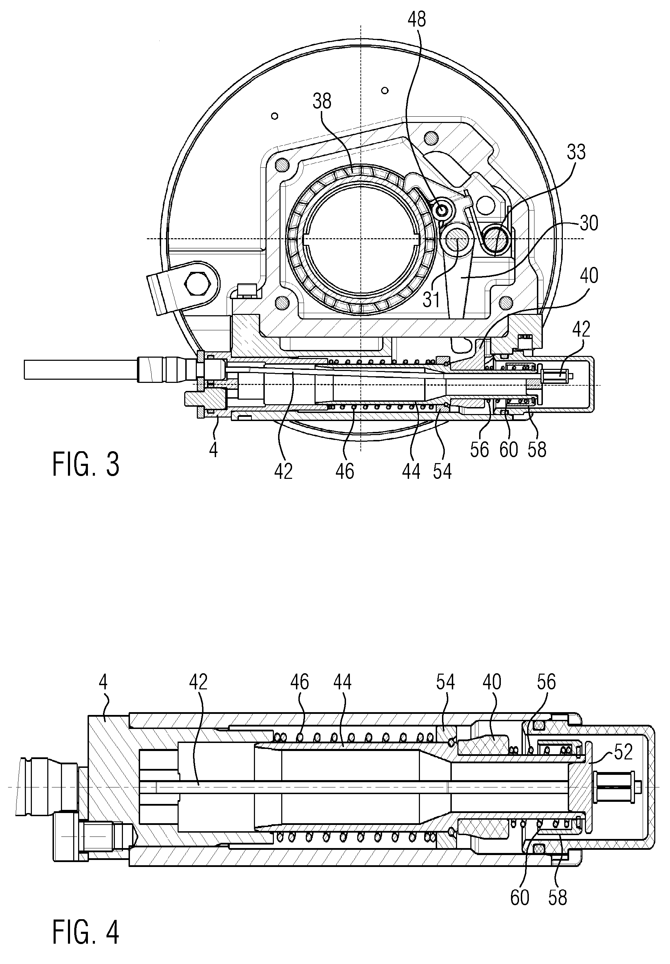

Wie am besten in Fig.3 und Fig.4 zu sehen ist, weist die Notlösebetätigungseinrichtung einen Bowdenzug 42 sowie eine im Gehäuse 4 verschieblich gelagerte Betätigungshülse 44 als Betätigungselemente auf, an deren freiem Ende ein Kopf des Bowdenzugs 42 vorzugsweise unmittelbar und beispielsweise mit Hilfe einer Kappe 52 befestigt ist, welche in einer endseitigen Öffnung der Betätigungshülse 44 befestigt ist. Dabei stützt sich eine Hülle des Bowdenzugs 42 andererseits am Gehäuse 4 ab, wobei der Bowdenzug 42 das Innere der Betätigungshülse 44 axial bis zu deren freiem Ende durchragt. Die Betätigungshülse 44 ist durch eine als Druckschraubenfeder ausgeführte Rückstellfeder 46 gegen eine Betätigung durch den Bowdenzug 42 belastet.

Die Rückstellfeder 46 ist an einem am äußeren Umfang der Betätigungshülse 44 befestigten Ring 54 abgestützt, welcher zugleich einen axialen Anschlag für den als Schiebering ausgeführten Mitnehmer 40 bildet, welcher am äußeren Umfang der Betätigungshülse 44 axial verschieblich gelagert ist. Andererseits wird der Mitnehmer 40 durch eine Schraubendruckfeder 56 in Richtung auf den Ring 54 als axialer Anschlag belastet. Diese Schraubendruckfeder 56 stützt sich andererseits an einem Boden einer Hülse 58 ab, welche an dem Ende der Betätigungshülse 44 befestigt ist, an welchem auch der Kopf des Bowdenzugs 42 gelagert ist. Die Hülse 58 bildet mit ihrem freien Rand 60 einen weiteren Anschlag für den Mitnehmer 40, so dass dieser sich zwischen dem Ring 54 und dem Rand 60 der Hülse auf der Betätigungshülse 44 axial bewegen kann.

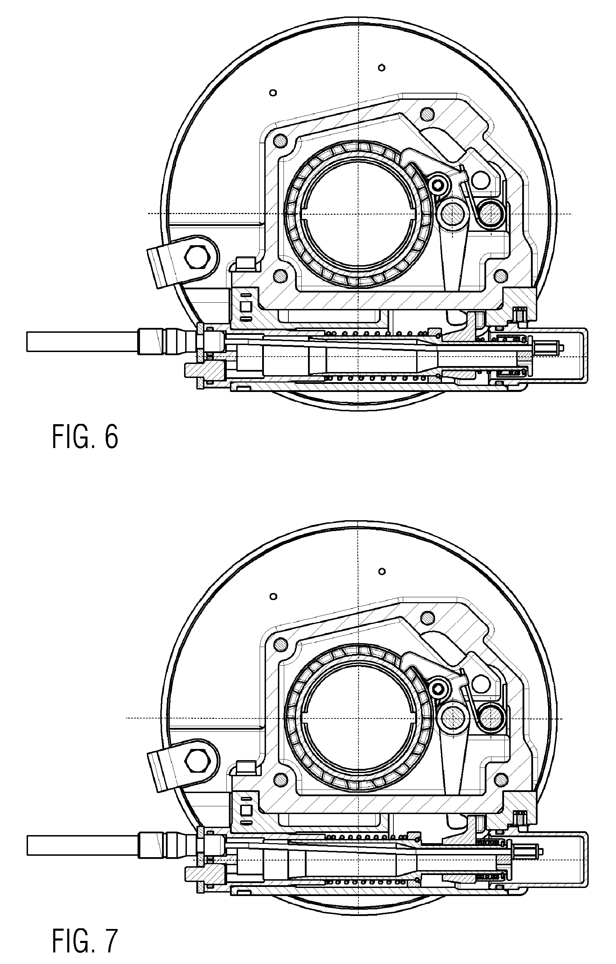

Wenn nun der Bowdenzug 42 betätigt wird, in Fig.2 nach links, so wird die Betätigungshülse 44 gegen die Federkräfte der Rückstellfeder 46 nach links verschoben. Dabei tritt der Mitnehmer 40 zunächst in Kontakt mit dem anderen Ende der Sperrklinke 30, wobei die Schraubendruckfeder 56 noch nicht komprimiert wird (Fig.6).

Bei weiterer Betätigung des Bowdenzugs 42 bewegt sich der Mitnehmer 40 aufgrund des Kontakts mit dem anderen Ende der sich in eingerückter Position befindlichen Sperrklinke 30 nach rechts, wobei dann die Schraubendruckfeder 56 so weit komprimiert wird, dass der Mitnehmer 40 am Rand 60 der Hülse 58 anschlägt. Diese Situation zeigt Fig.7.

Die Schraubendruckfeder 56 ist dabei so ausgelegt, dass die Federkräfte, welche durch ihre durch den Anschlag am Rand 60 der Hülse 58 begrenzte Kompression bzw. durch den dadurch begrenzten Federweg erzeugt und welche über den Mitnehmer 40 auf die Sperrklinke 30 übertragen werden, nicht ausreichen, um die Sperrklinke 30 in die gegenüber dem Zahnrad 38 ausgerückte Position zu schwenken.

Vielmehr sorgen die über den am Rand 60 der Hülse 58 angeschlagenen Mitnehmer 40 auf die Sperrklinke 30 übertragenen Betätigungskräfte des weiterhin betätigten Bowdenzugs 42 dafür, dass die Sperrklinke 30 von ihrer gemäß Fig.6 noch eingerückten Position aus dem Zahnrad 38 ausrückt. Dann ist das Zahnrad 38 frei und beginnt aufgrund der über die Spindelanordnung 26 wirkenden Bremskräfte zu rotieren, welche sich dann abbauen können, bis der Federspeicherbremszylinder 2 bremskraftfrei ist (Fig.8).

Die Sperrklinke 30 wird dann durch das Zahnrad 38 nicht mehr belastet. Sie ist dann nur noch durch ihre Rückstellfeder 33 in Eingriffsrichtung mit dem Zahnrad 38 und durch die aufgrund der Kompression der Schraubendruckfeder 56 über den Mitnehmer 40 in Gegenrichtung, also außer Eingriff mit dem Zahnrad 38 belastet. Da die Schraubendruckfeder 56 derart ausgelegt ist, dass die durch die Schraubendruckfeder 56 auf die Sperrklinke 30 ausgeübte Federkraft bzw. das aufgrund dieser Federkraft auf die Sperrklinke 30 ausgeübte Drehmoment größer ist als das Drehmoment, welche die Rückstellfeder 33 auf die Sperrklinke 30 ausübt, wird die Sperrklinke 30 in ihre in Bezug zum Zahnrad 38 vollständig ausgerückte Position geschwenkt, wie sie in Fig.9 gezeigt ist, ohne dass hierfür eine weitere Betätigung des Bowdenzugs 42 notwendig wäre. Die Schraubendruckfeder 56 entspannt sich dabei nach links und schiebt den Mitnehmer 40 gegen Anschlag am Ring 54.

Wenn dann der maximale Hub des Bowdenzugs 42 gemäß Fig.10 erreicht ist, bei dem die Betätigungshülse 44 gegen einen inneren Anschlag im Gehäuse 4 anschlägt und sich der Mitnehmer 40 wieder ein Stück weit vom Ring 54 entfernt, verbleibt die Sperrklinke 30 in ihrer vollständig ausgerückten Position, in welcher sie dann vom Riegel 48 arretiert wird, der in ihre Ausnehmung 35 eingreift.

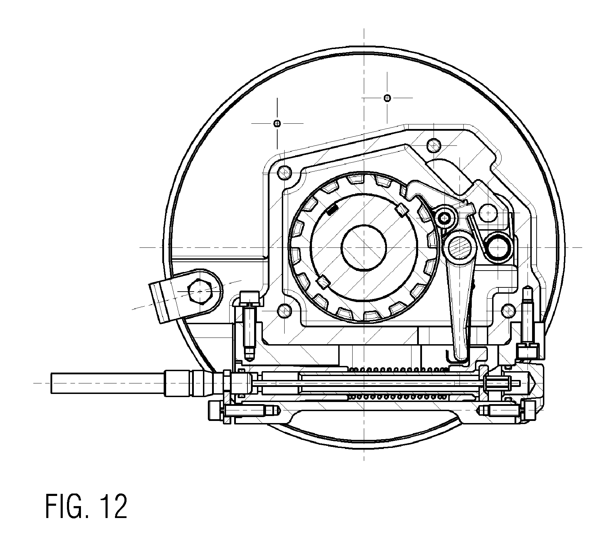

Bei der in Fig.11 und Fig.12 gezeigten Ausführungsform eines Federspeicherbremszylinders 2 gemäß der Erfindung sind gegenüber dem voran gehenden Ausführungsbeispiel identische oder äquivalent wirkende Bauteile und Baugruppen mit den gleichen Bezugszeichen gekennzeichnet. Im Unterschied zu dieser ist der Mitnehmer 40 nicht auf der Betätigungshülse 44 axial verschieblich gelagert, sondern dort axialfest fixiert, bevorzugt am Ende der Betätigungshülse 44. Dann ist die die Betätigungshülse 44 bzw. den Bowdenzug 42 in die Ausgangslage rückstellende Rückstellfeder 46 beispielsweise einerseits am Gehäuse 4 and andererseits am Mitnehmer 40 abgestützt. Die hier zwischen dem Mitnehmer 40 und der Sperrklinke 30 vorgesehenen Federmittel bestehen vorzugsweise in einer Blattfeder 62, welche mit ihrem einen Ende beispielsweise an dem zum Mitnehmer 40 weisenden Arm der Sperrklinke 30 befestigt ist und mit ihrem anderen Ende das Ende dieses Arms teilweise umschlingend einen lichten Abstand s zu diesem Arm aufweist. Um diesen einen vorgegebenen Federweg bildenden lichten Abstand s wird dann die Blattfeder 62 unter Biegebelastung komprimiert, wenn der Bowdenzug 42 betätigt und infolgedessen der Mitnehmer 40 die Sperrklinke 30 kontaktiert und verschwenkt, wie aus Fig.12 hervorgeht.

Wie beim vorangehenden Ausführungsbeispiel wird dann in der Blattfeder 62 eine potentielle Energie bzw. eine Federkraft gespeichert, welche von dem vorgegebenen Federweg s abhängt und welche die Sperrklinke 30, wenn diese durch Betätigung des Bowdenzugs 42 in die aus dem Zahnrad 38 ausgerückte Position gebracht wurde, in die vollständig ausgerückte Position bringt bzw. sie in dieser hält. Ebenso ist die Blattfeder 62 in Bezug zur Rückstellfeder 46 gemäß Fig. 5 parallel geschaltet.

### Bezugszeichenliste

- 2: Federspeicherbremszylinder
- 4: Gehäuse
- 6: Federspeicherkolben
- 8a-8c: Dichtungen/Gleitbänder
- 10a/b: Gehäusedeckel
- 12: Sprengring
- 14, 16: Federspeicherfeder
- 18: Druckraum
- 20: Luftanschluss
- 24: Kolbenstange
- 26: Notlöseeinrichtung
- 28: Spindelanordnung
- 30: Sperrklinke
- 31: Achse
- 33: Klinkenfeder
- 32: Gewindespindel
- 34: Führung
- 35: Ausnehmung
- 36: Passfeder
- 38: Zahnrad
- 40: Mitnehmer
- 42: Bowdenzug
- 44: Betätigungshülse
- 46: Rückstellfeder
- 48: Riegel
- 49: Riegelfeder
- 50: Rückdruckfeder
- 51: Riegelkopf
- 52: Kappe
- 54: Ring
- 56: Schraubendruckfeder
- 58: Hülse
- 60: Rand
- 62: Blattfeder

## Patentansprüche

1. Federspeicherbremszylinder mit einem Gehäuse (4), in dem ein durch wenigstens eine Federspeicherfeder (14, 16) belasteter Federspeicherkolben (6) mit einer Kolbenstange (24) axial verschiebbar ist, sowie mit einer Notlöseeinrichtung (26) umfassend eine Notlösebetätigungseinrichtung, einen Notlösemechanismus mit einem Zahnrad (38) zum Unterbrechen des Kraftflusses zwischen Federspeicherkolben (6) und Kolbenstange (24) sowie eine Halteeinrichtung (30), die zum Halten der Notlöseeinrichtung (26) in verschiedenen Haltepositionen ausgelegt ist, wobei die Halteeinrichtung eine in Bezug zu dem Zahnrad (38) in eine ein- und ausgerückte Position schwenkbare Sperrklinke (30) und die Notlösebetätigungseinrichtung wenigstens ein gegenüber dem Gehäuse (4) verschiebliches und durch Rückstellfedermittel (46) in seine Ausgangslage belastetes Betätigungsglied (42, 44) sowie einen zusammen mit dem Betätigungsglied (44) betätigbaren Mitnehmer (40) zum Mitnehmen der Sperrklinke (30) aufweist, derart, dass bei einer Betätigung des Betätigungsglieds (42, 44) die Betätigungskraft auf den Mitnehmer (40) und von diesem auf die Sperrklinke (30) übertragen wird, zum Überführen der Sperrklinke (30) von einer gegenüber dem Zahnrad (38) eingerückten Position in eine ausgerückte Position, **dadurch gekennzeichnet, dass** zwischen dem Betätigungsglied (42, 44) und dem Mitnehmer (40) oder zwischen dem Mitnehmer (40) und der Sperrklinke (30) Federmittel (56; 62) vorgesehen sind, welche parallel zu den Rückstellfedermitteln (46) geschaltet sind und beim Mitnehmen der Sperrklinke (30) durch den Mitnehmer (40) unter Erzeugung einer Federkraft komprimiert werden, welche die Sperrklinke (30) in die aus dem Zahnrad (38) ausgerückte Position spannt.

2. Federspeicherbremszylinder nach Anspruch 1, **dadurch gekennzeichnet, dass** das Betätigungsglied (42, 44) wenigstens einen Bowdenzug (42) sowie eine in dem Gehäuse (4) verschieblich gelagerte Betätigungshülse (44) aufweist, an welcher der Bowdenzug (42) befestigt ist und welche gegen eine Betätigung durch den Bowdenzug (42) rückstellende Rückstellfeder (46) der Rückstellfedermittel belastet ist.

3. Federspeicherbremszylinder nach einem der vorhergehenden Ansprüche, **dadurch gekennzeichnet, dass** die Federmittel (56; 62) so ausgelegt sind, dass durch die Federmittel auf die Sperrklinke (30) ausgeübte Federkraft kleiner ist als eine Kraft, welche notwendig ist, um die Sperrklinke (30) von der in Bezug zum Zahnrad (38) eingerückten Position in die ausgerückte Position zu bewegen.

4. Federspeicherbremszylinder nach einem der vorhergehenden Ansprüche, **dadurch gekennzeichnet, dass** die Sperrklinke (30) durch eine Rückstellfeder (33) in die in Bezug zum Zahnrad (38) eingerückte Position belastet ist, wobei die Federmittel (56; 62) derart ausgelegt sind, dass das durch die Federmittel (56; 62) auf die Sperrklinke (30) ausgeübte Drehmoment größer ist als das Drehmoment, welches die Rückstellfeder (33) auf die Sperrklinke (30) ausübt.

5. Federspeicherbremszylinder nach einem der vorhergehenden Ansprüche, **dadurch gekennzeichnet, dass** die zwischen dem Betätigungsglied (42, 44) und dem Mitnehmer (40) vorgesehenen Federmittel (56) wenigstens eine Schraubenfeder beinhalten.

6. Federspeicherbremszylinder nach Anspruch 5, **dadurch gekennzeichnet, dass** der Mitnehmer (40) an oder auf dem Betätigungsglied (44) verschieblich gelagert ist.

7. Federspeicherbremszylinder nach Anspruch 6, **dadurch gekennzeichnet, dass** mit dem Betätigungsglied (44) verbundene Anschlagmittel (58) vorgesehen sind, gegen welche der Mitnehmer (40) anschlagbar ausgebildet ist, wobei in Anschlagposition des Mitnehmers (40) die zwischen dem Betätigungsglied (44) und dem Mitnehmer (40) vorgesehenen Federmittel (56) um einen vorgegebenen Federweg komprimierbar sind und wobei die Größe des die Sperrklinke (30) in die aus dem Zahnrad (48) ausgerückte Position spannenden Drehmoments durch den vorgegebenen Federweg bestimmt ist.

8. Federspeicherbremszylinder nach Anspruch 7, **dadurch gekennzeichnet, dass** die Anschlagmittel durch eine mit dem Betätigungselement (44) verbundene Hülse gebildet werden, welcher die Federmittel (56) wenigstens teilweise umschließt, wobei der offene Rand (60) der Hülse (58) gegen eine Stirnfläche des Mitnehmers (40) anschlagbar ausgebildet ist.

9. Federspeicherbremszylinder nach einem der Ansprüche 1 bis 4, **dadurch gekennzeichnet, dass** die zwischen dem Mitnehmer (40) und der Sperrklinke (30) vorgesehenen Federmittel (62) wenigstens eine Blattfeder umfassen.

10. Federspeicherbremszylinder nach Anspruch 9, **dadurch gekennzeichnet, dass** der Mitnehmer (40) mit dem Betätigungsglied (42, 44) axialfest verbunden ist.

11. Federspeicherbremszylinder nach einem der vorhergehenden Ansprüche, **dadurch gekennzeichnet, dass** eine Sperreinrichtung (48) zum Verhindern des Haltens der Sperrklinke (30) bei nur teilweise gelöstem Federspeicherkolben (6) vorgesehen ist.

12. Federspeicherbremszylinder nach Anspruch 11, **dadurch gekennzeichnet, dass** die Sperreinrichtung einen Riegel (48) aufweist, der die Sperrklinke (30) in der ausgerückten Position verriegelt, bis der Federspeicherkolben (6) vollständig gelöst ist.

13. Federspeicherbremszylinder nach Anspruch 12, **dadurch gekennzeichnet, dass** der Riegel (48) im wesentlichen eine bolzenartige Form aufweist und mit einem Riegelkopf (51) versehen ist, welcher dazu ausgelegt ist, gegenüber einer Ausnehmung (35) der Sperrklinke (30) eine Eingriffstellung oder eine Außereingriffsstellung einzunehmen.

14. Federspeicherbremszylinder nach Anspruch 13, **dadurch gekennzeichnet, dass** der Riegel (48) durch eine Riegelfeder (49) in die Eingriffstellung mit der Sperrklinke (30) vorgespannt ist.

15. Federspeicherbremszylinder nach einem der Ansprüche 13 oder 14, **dadurch gekennzeichnet, dass** der Riegel (48) vom Federspeicherbremskolben (6) aus der Eingriffsstellung in die Außereingriffsstellung verschiebbar ist.

16. Federspeicherbremszylinder nach einem der Ansprüche 12 bis 15, **dadurch gekennzeichnet, dass** die Sperrklinke (30) und der Riegel (48) mit der Kolbenstange (24) verbunden sind.

17. Federspeicherbremszylinder nach einem der vorstehenden Ansprüche, **dadurch gekennzeichnet, dass** im Kraftfluss zwischen dem Federspeicherkolben (6) und der Kolbenstange (24) als Element des Notlösemechanismus eine Spindelanordnung (28) mit Gewindespindel (32) angeordnet ist.

18. Federspeicherbremszylinder nach Anspruch 17, **dadurch gekennzeichnet, dass** das Drehmoment der Gewindespindel (32) über eine verschiebbare Führung (34) mit Passfeder (36) auf das Zahnrad (38) übertragen wird.

19. Federspeicherbremszylinder nach einem der vorstehenden Ansprüche, **dadurch gekennzeichnet, dass** er pneumatisch, hydraulisch oder elektromechanisch betätigt ist und bei einer Auslegung mittels pneumatischer oder hydraulischer Betätigung einen Druckanschluss (20) zum Beaufschlagen eines durch den Federspeicherkolben (6) begrenzten Druckraums (18) mit einem Druckfluid aufweist.

## Claims

1. Spring brake cylinder, having a housing (4) in which a spring-loaded piston (6), loaded by means of at least one accumulator spring (14, 16), with a piston rod (24) is axially movable, and also having an emergency release device (26) comprising an emergency release operating device, an emergency release mechanism with a toothed wheel (38) for interrupting the force flux between spring-loaded piston (6) and piston rod (24), and also having a retaining device (30) which is designed for holding the emergency release device (26) in different retained positions, wherein the retaining device has a locking pawl (30) which can be pivoted into an engaged and disengaged position in relation to the toothed wheel (38), and the emergency release operating device has at least one operating element (42, 44) which is movable in relation to the housing (4) and loaded in its initial position by means of return spring means (46), and also having a driver (40) which can be operated together with the operating sleeve (44) for driving the locking pawl (30) in such a way that during an operation of the operating element (42, 44) the operating force is transmitted to the driver (40) and from this transmitted to the locking pawl (30) for transferring the locking pawl (30) from an engaged position in relation to the toothed wheel (38) into a disengaged position, **characterized in that** between the operating element (42, 44) and the driver (40), or between the driver (40) and the locking pawl (30), provision is made for spring means (56; 62) which are connected in parallel to the return spring means (46) and during the driving of the locking pawl (30) are compressed by means of the driver (40), creating a spring force which tensions the locking pawl (30) in the position in which it is disengaged from the toothed wheel (48).

2. Spring brake cylinder according to Claim 1, **characterized in that** the operating element (42, 44) has at least one Bowden cable (42) and also an operating sleeve (44) which is movably mounted in the housing (4) and on which is fastened the Bowden cable (42) and which is loaded against an operation by the Bowden cable (42) restoring return spring (46) of the return spring means.

3. Spring brake cylinder according to one of the preceding claims, **characterized in that** the spring means (56; 62) are designed so that spring force which is exerted upon the locking pawl (30) by the spring means is smaller than a force which is necessary in order to move the locking pawl (30) from the engaged position in relation to the toothed wheel (38) into the disengaged position.

4. Spring brake cylinder according to one of the preceding claims, **characterized in that** the locking pawl (30) is loaded in the engaged position in relation to the toothed wheel (38) by means of a return spring (33), wherein the spring means (56; 62) are designed in such a way that the torque which is exerted upon the locking pawl (30) by the spring means (56; 62) is greater than the torque which the return spring (33) exerts upon the locking pawl (30).

5. Spring brake cylinder according to one of the preceding claims, **characterized in that** the spring means (56) which are provided between the operating element (42, 44) and the driver (40) include at least one helical spring.

6. Spring brake cylinder according to Claim 5, **characterized in that** the driver (40) is movably mounted next to or on the operating sleeve (44).

7. Spring brake cylinder according to Claim 6, **characterized in that** the provision is made for stop means (58) which are connected to the operating sleeve (44) and against which the driver (40) is designed to butt, wherein in the stop position of the driver (40) the spring means (56) which are provided between the operating sleeve (44) and the driver (40) can be compressed by a predetermined spring excursion and wherein the magnitude of the torque which tensions the locking pawl (30) in the position in which it is disengaged from the toothed wheel (48) is determined by the predetermined spring excursion.

8. Spring brake cylinder according to Claim 7, **characterized in that** the stop means (58) are formed by a sleeve which is connected to the operating sleeve (44) and which at least partially encompasses the spring means (56), wherein the open edge (60) of the sleeve (58) is designed to butt against an end face of the driver (40).

9. Spring brake cylinder according to one of Claims 1 to 4, **characterized in that** the spring means (62) which are provided between the driver (40) and the locking pawl (30) comprise at least one leaf spring.

10. Spring brake cylinder according to Claim 9, **characterized in that** the driver (40) is connected to the operating element (42, 44) in an axially fixed manner.

11. Spring brake cylinder according to one of the preceding claims, **characterized in that** provision is made for a locking device (48) for preventing retention of the locking pawl (30) in the case of an only partially released spring-loaded piston (6).

12. Spring brake cylinder according to Claim 11, **characterized in that** the locking device has a locking bolt (48) which locks the locking pawl (30) in the disengaged position until the spring-loaded piston (6) is fully released.

13. Spring brake cylinder according to Claim 12, **characterized in that** the locking bolt (48) has in the main a bolt-like form and is provided with a bolt head (51) which is designed for occupying an engaged position or a disengaged position in relation to a recess (35) of the locking pawl (30).

14. Spring brake cylinder according to Claim 13, **characterized in that** the locking bolt (48) is pretensioned in the engaged position with the locking pawl (30) by means of a locking bolt spring (49).

15. Spring brake cylinder according to Claim 13 or 14, **characterized in that** the locking bolt (48) can be shifted from the engaged position into the disengaged position by the spring-loaded piston (6).

16. Spring brake cylinder according to one of Claims 12 to 15, **characterized in that** the locking pawl (30) and the locking bolt (48) are connected to the piston rod (24)..

17. Spring brake cylinder according to one of the preceding claims, **characterized in that** a spindle arrangement (28) with a threaded spindle (32) is arranged in the force flux between the spring-loaded piston (6) and the piston rod (24) as an element of the emergency release mechanism.

18. Spring brake cylinder according to Claim 17, **characterized in that** the torque of the threaded spindle (32) is transmitted to the toothed wheel (38) via a movable guide (34) with a feather key (36).

19. Spring brake cylinder according to one of the preceding claims, **characterized in that** it is operated pneumatically, hydraulically or electromechanically and in the case of a design by means of pneumatic or hydraulic operation has a pressure connection (20) for supplying a pressure chamber (18), which is delimited by the spring-loaded piston (6), with a pressurized fluid.

## Revendications

1. Cylindre de frein à ressort accumulateur, comprenant une enveloppe (4), dans laquelle un piston (6) à ressort accumulateur soumis à l'action d'un ressort (14, 16) accumulateur et ayant une tige (24) peut coulisser axialement, ainsi qu'un dispositif (26) de desserrage d'urgence, comprenant un dispositif d'actionnement de desserrage d'urgence, un mécanisme de desserrage d'urgence ayant une roue (38) dentée pour interrompre le flux de force entre le piston (6) à ressort accumulateur et la tige (24) du piston, ainsi qu'un dispositif (30) de maintien, qui est conçu pour maintenir le dispositif (26) de desserrage d'urgence dans des positions de maintien différentes, le dispositif de maintien ayant un cliquet (30) d'arrêt pouvant pivoter par rapport à la roue (38) dentée dans une position d'encliquetage et dans une position de désencliquetage et le dispositif d'actionnement de desserrage d'urgence ayant au moins un organe (42, 44) d'actionnement coulissant par rapport à l'enveloppe (4) et soumis dans sa position initiale à l'action d'un moyen (46) à ressort de rappel, ainsi qu'un entraîneur (40) pouvant être actionné ensemble avec l'organe (44) d'actionnement pour entraîner le cliquet (30) d'arrêt, de manière à ce que, lorsque l'organe (42, 44) d'actionnement est actionné, la force d'actionnement soit transmise à l'entraîneur (40) et de celui-ci au cliquet (30) d'arrêt pour faire passer le cliquet (30) d'arrêt d'une position encliquetée dans la roue (38) dentée à une position désencliquetée, **caractérisé en ce qu'**il est prévu, entre l'organe (42, 44) d'actionnement et l'entraîneur (40) ou entre l'entraîneur (40) et le cliquet (30) d'arrêt, des moyens (56; 62) à ressort, qui sont montés parallèlement aux moyens (46) à ressort de rappel et qui, lorsque le cliquet (30) d'arrêt est entraîné par l'entraîneur (40), sont comprimés en produisant une force de ressort, qui bloquent le cliquet (30) d'arrêt dans la position désencliquetée de la roue (38) dentée.

2. Cylindre de frein à ressort accumulateur suivant la revendication 1, **caractérisé en ce que** l'organe (42, 44) d'actionnement a au moins un câble (42) Bowden, ainsi qu'un manchon (44), qui est monté coulissant dans l'enveloppe (4) et qui est soumis à l'action d'un ressort (46) de rappel du moyen à ressort de rappel, rappelant à l'encontre d'un actionnement par le câble (42) Bowden.

3. Cylindre de frein à ressort accumulateur suivant l'une des revendications précédentes, **caractérisé en ce que** les moyens (56; 62) à ressort sont conçus de manière à ce que la force de ressort appliquée par les moyens à ressort au cliquet (30) d'arrêt soit plus petite qu'une force qui est nécessaire pour faire passer le cliquet (30) d'arrêt de la position encliquetée dans la roue (38) dentée à la position désencliquetée.

4. Cylindre de frein à ressort accumulateur suivant l'une des revendications précédentes, **caractérisé en ce que** le cliquet (30) d'arrêt est soumis à l'action d'un ressort (33) de rappel dans la position encliquetée dans la roue (38) dentée, les moyens (56; 62) à ressort étant conçus de manière à ce que le couple de rotation appliqué au cliquet (30) d'arrêt par les moyens (56; 62) à ressort soit plus grand que le couple de rotation que le ressort (33) de rappel applique au cliquet (30) d'arrêt.

5. Cylindre de frein à ressort accumulateur suivant l'une des revendications précédentes, **caractérisé en ce que** les moyens (56) à ressort prévus entre l'organe (42, 44) d'actionnement et l'entraîneur (40) comportent au moins un ressort hélicoïdal.

6. Cylindre de frein à ressort accumulateur suivant la revendication 5, **caractérisé en ce que** l'entraîneur (40) est monté coulissant dans ou sur l'organe (44) d'actionnement.

7. Cylindre de frein à ressort accumulateur suivant la revendication 6, **caractérisé en ce qu'**il est prévu des moyens (58) de butée, qui sont reliés à l'organe (44) d'actionnement et sur lesquels l'entraîneur (40) peut venir buter, dans lequel, en la position de butée de l'entraîneur (40), les moyens (56) à ressort prévus entre l'organe (44) d'actionnement et l'entraîneur (40) peuvent être comprimés d'une course de ressort donnée à l'avance et dans lequel la valeur du couple de rotation bloquant le cliquet (30) d'arrêt dans la position désencliquetée de la roue (48) dentée est déterminée par la course du ressort donnée à l'avance.

8. Cylindre de frein à ressort accumulateur suivant la revendication 7, **caractérisé en ce que** les moyens de butée sont formés par un manchon, qui est relié à l'élément (44) d'actionnement et qui entoure, au moins en partie, les moyens (56) à ressort, le bord (60) ouvert du manchon (58) pouvant venir en butée sur une surface frontale de l'entraîneur (40).

9. Cylindre de frein à ressort accumulateur suivant l'une des revendications 1 à 4, **caractérisé en ce que** les moyens (62) à ressort prévus entre l'entraîneur (40) et le cliquet (30) d'arrêt comprennent au moins un ressort à lame.

10. Cylindre de frein à ressort accumulateur suivant la revendication 9, **caractérisé en ce que** l'entraîneur (40) est relié d'une manière fixe axialement à l'organe (42, 44) d'actionnement.

11. Cylindre de frein à ressort accumulateur suivant l'une des revendications précédentes, **caractérisé en ce qu'**il est prévu un dispositif (48) d'arrêt pour empêcher le maintien du cliquet (30) d'arrêt, lorsque le piston (6) du ressort accumulateur n'est desserré que partiellement.

12. Cylindre de frein à ressort accumulateur suivant la revendication 11, **caractérisé en ce que** le dispositif d'arrêt a un verrou (48), qui verrouille le cliquet (30) d'arrêt dans la position désencliquetée jusqu'à ce que le piston (6) du ressort accumulateur soit desserré complètement.

13. Cylindre de frein à ressort accumulateur suivant la revendication 12, **caractérisé en ce que** le verrou (48) a sensiblement une forme de type en axe et est pourvu d'une tête (51) de verrou, qui est conçue pour prendre, par rapport à un évidement (35) du cliquet (30) d'arrêt, une position en prise ou une position hors de prise.

14. Cylindre de frein à ressort accumulateur suivant la revendication 13, **caractérisé en ce que** le verrou (48) est précontraint par un ressort (49) de verrou dans la position de prise avec le cliquet (30) d'arrêt.

15. Cylindre de frein à ressort accumulateur suivant l'une des revendications 13 ou 14, **caractérisé en ce que** le verrou (48) peut, par le piston (6) de frein à ressort accumulateur, coulisser de la position de prise à la position hors de prise.

16. Cylindre de frein à ressort accumulateur suivant l'une des revendications 12 à 15, **caractérisé en ce que** le cliquet (30) d'arrêt et le verrou (48) sont reliés à la tige (24) du piston.

17. Cylindre de frein à ressort accumulateur suivant l'une des revendications précédentes, **caractérisé en ce que**, dans le flux de force entre le piston (6) à ressort accumulateur et la tige (24) du piston, un agencement (28) de broche à broche (32) filetée est monté comme élément du mécanisme du desserrage d'urgence.

18. Cylindre de frein à ressort accumulateur suivant la revendication 17, **caractérisé en ce que** le couple de rotation de la broche (32) filetée est transmis à la roue (38) dentée par un guidage (34) à clavette (36).

19. Cylindre de frein à ressort accumulateur suivant l'une des revendications précédentes, **caractérisé en ce qu'**il est actionné pneumatiquement, hydrauliquement ou électro-mécaniquement et dans une conception au moyen d'un actionnement pneumatique ou hydraulique, il a un raccord (20) de pression d'alimentation en fluide sous pression d'une chambre (18) de pression délimitée par le piston (6) à ressort accumulateur.
